(19) Europäisches Patentamt / European Patent Office / Office européen des brevets

(11) **EP 1 993 906 B1**

(12) **FASCICULE DE BREVET EUROPEEN**

(45) Date de publication et mention de la délivrance du brevet:
**28.11.2012 Bulletin 2012/48**

(21) Numéro de dépôt: **07731133.0**

(22) Date de dépôt: **13.03.2007**

(51) Int Cl.:
**B64C 25/48** (2006.01)   **B60T 8/17** (2006.01)

(86) Numéro de dépôt international:
**PCT/FR2007/000437**

(87) Numéro de publication internationale:
**WO 2007/104862 (20.09.2007 Gazette 2007/38)**

(54) **PROCÉDÉ DE RÉPARTITION DU FREINAGE ENTRE LES FREINS D'UN AÉRONEF**

VERFAHREN ZUR VERTEILUNG EINER BREMSLEISTUNG AUF FLUGZEUGBREMSEN

METHOD FOR DISTRIBUTING BRAKE PROPORTIONING AMONG AIRCRAFT BRAKES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **13.03.2006 FR 0602183**

(43) Date de publication de la demande:
**26.11.2008 Bulletin 2008/48**

(73) Titulaire: **Messier-Bugatti-Dowty**
**78140 Velizy Villacoublay (FR)**

(72) Inventeurs:
• **DELLAC, Stéphane**
**31170 Tournefeuille (FR)**
• **JACQUET, Arnaud**
**92140 Clamart (FR)**

• **GISSINGER, Gérard, Léon**
**68210 Balschwiller (FR)**
• **BASSET, Michel**
**68990 Heimsbrunn (FR)**
• **CHAMAILLARD, Yann**
**45130 Le Bardon (FR)**
• **GARCIA, Jean-Pierre**
**31170 Colomiers (FR)**

(74) Mandataire: **Parzy, Benjamin Alain et al**
**Cabinet Boettcher**
**16, rue Médéric**
**75017 Paris (FR)**

(56) Documents cités:
WO-A-2005/087563        GB-A- 1 585 321
US-A1- 2005 231 030     US-A1- 2005 231 031

## Description

L'invention concerne un procédé de répartition du freinage entre les freins d'un aéronef.

## ARRIERE-PLAN DE L'INVENTION

Les aéronefs d'une certaine importance sont généralement équipés d'un calculateur de freinage qui génère un objectif d'effort de freinage en réponse soit d'un appui par le pilote sur les pédales de freins, soit en réponse à une sélection par le pilote d'un niveau de décélération déterminé (fonction "autobrake"). Cet objectif d'effort de freinage est en pratique réalisé en envoyant des consignes de freinage aux organes de distribution de puissance associés aux freins, identiques pour tous les freins et qui sont telles que la somme des efforts de freinage développés par les freins en réponse à ces consignes de freinage réalise l'objectif d'effort de freinage. Un procédé de freinage d'aéronef est aussi connu du document brevet US 2005/231031.

## OBJET DE L'INVENTION

L'invention a pour objet un procédé de répartition permettant d'optimiser l'utilisation des freins.

## BREVE DESCRIPTION DE L'INVENTION

En vue de la réalisation de ce but, on propose un procédé de guidage au sol d'un aéronef comportant une pluralité de freins, comportant les étapes de:

- estimer un objectif d'effort de freinage et un objectif de couple de lacet à réaliser par les freins de l'aéronef ;
- définir au moins deux groupes de freins;
- calculer pour chaque groupe un niveau de freinage à réaliser par ledit groupe, lesdits niveaux de freinage étant calculés de sorte qu'un freinage réalisé selon lesdits niveaux de freinage soit, au moins dans des conditions normales de fonctionnement des freins, confforme à l'objectif d'effort de freinage et l'objectif de couple de lacet.

Ainsi, les freins sont utilisés pour ralentir l'aéronef, mais également pour aider à faire tourner celui-ci. La consigne des freins d'un groupe peut dès lors être différente de la consigne des freins de l'autre groupe.

Selon un mode préféré de mise en oeuvre, on détermine les niveaux de freinage qui maximisent un taux de satisfaction simultanée de l'objectif de freinage et de l'objectif de couple de lacet.

Avantageusement, on répartit les freins en au moins un groupe gauche et un groupe droit symétriques l'un de l'autre. Dans ce cas, l'objectif de couple de lacet est de préférence spécifié par un écart entre un effort de freinage à réaliser par le groupe gauche et un effort de freinage à réaliser par le groupe droit.

De préférence, l'objectif d'effort de freinage ou l'objectif de couple de lacet sont estimés en tenant compte d'une action d'organes de l'aéronef autres que les freins pouvant avoir une influence sur une trajectoire de l'aéronef.

## BREVE DESCRIPTION DES DESSINS

L'invention sera mieux comprise à la lumière de la description qui suit en référence aux figures des dessins annexés parmi lesquelles :

- la figure 1 est une vue schématique d'un aéronef comportant quatre atterrisseurs principaux à roues freinées ;
- la figure 2 est un schéma-bloc d'une architecture de guidage au sol de l'aéronef de la figure 1 selon un mode particulier de mise en oeuvre de l'invention ;
- la figure 3 est une vue détaillée de la figure 2 illustrant la commande de freinage ;
- la figure 4 est un schéma-bloc d'une répartition à l'intérieur d'un même groupe, adaptable à la commande illustrée à la figure 3.

## DESCRIPTION DETAILLEE DE L'INVENTION

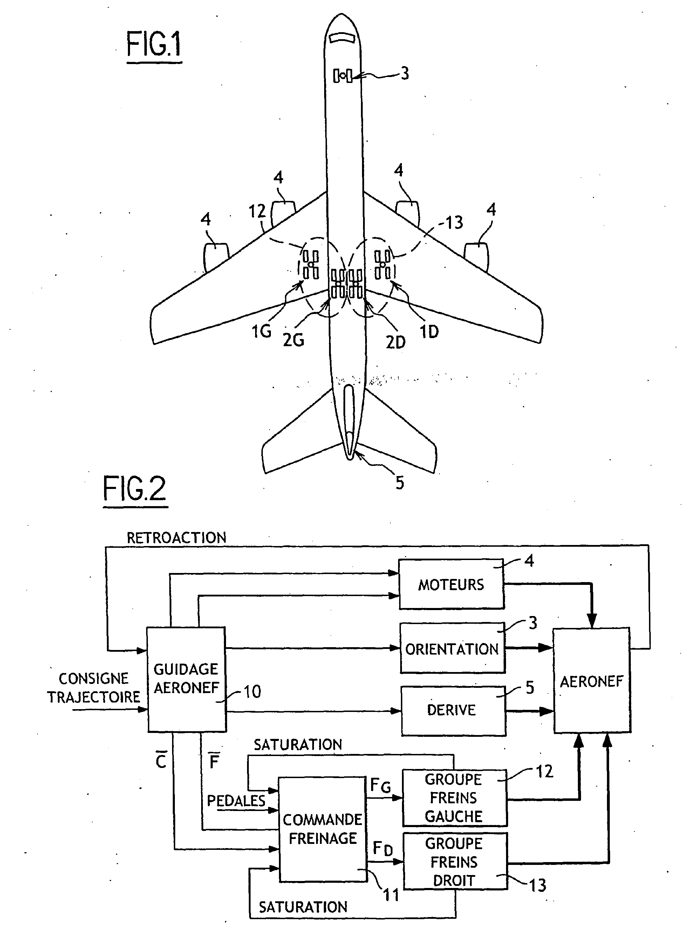

L'invention est ici illustrée en référence à un aéronef tel que celui de la figure 1 comportant deux atterrisseurs principaux de voilure 1G et 1D, deux atterrisseurs principaux de fuselage 2G et 2D, et un atterrisseur auxiliaire 3 à roues orientables. Les atterrisseurs principaux 1G, 1D, 2G, 2D portent chacun quatre roues équipées de freins. L'aéronef est en outre équipé de moteurs 4 et d'une dérive 5.

L'invention s'insère dans une architecture de guidage au sol de l'aéronef illustrée à la figure 2 qui comporte un module, de guidage de l'aéronef 10. Le module de guidage 10 reçoit en entrée une consigne de trajectoire (qui peut, le cas échéant être rectiligne) et commande tous les organes pouvant influer sur la trajectoire au sol de l'aéronef, c'est-à-dire les moteurs 4, l'orientation des roues de l'atterrisseur auxiliaire 3, la dérive 5, et, bien sûr, les freins des atterrisseurs principaux.

Le module de guidage 10 génère des ordres. à destination des moteurs 4, de la dérive 5 et de la commande d'orientation des roues de l'atterrisseur auxiliaire 3, et déduit par différence entre la consigne de trajectoire et les effets attendus des actions menées par les organes précités en réponse auxdits ordres un objectif de freinage $\overline{F}$ et un objectif de couple de lacet $\overline{C}$ à réaliser par les freins.

La consigne de trajectoire peut revêtir diverses formes:

- dans un mode de freinage pur, par exemple suite à un atterrissage, la consigne de trajectoire consistera à spécifier au module de guidage 10 au moins une décélération donnée et une vitesse de virage nulle ;

- dans un mode de manoeuvre au sol, par exemple entre la piste et l'aérogare, la consigne de trajectoire consistera à spécifier au module de guidage 10 au moins une vitesse de virage qui varie à tout instant pour suivre une trajectoire déterminée.

L'objectif de freinage *F* déterminé à partir de la consigne de trajectoire représente une consigne, c'est-à-dire les évolutions dans le temps d'un effort de freinage que les freins devraient développer pour que l'aéronef suive la trajectoire selon un mouvement (position, vitesse, accélération) donné. En pratique, l'objectif d'effort de freinage représente un ou plusieurs coups de freins de durée et d'intensité déterminée. A chaque coup de frein, il est possible d'associer une énergie totale à dissiper par l'ensemble des freins de l'aéronef, obtenue par intégration temporelle de l'objectif d'effort de freinage.

De même, L'objectif de couple de lacet $\overline{C}$ représente une consigne, c'est-à-dire les évolutions dans le temps du couple de lacet que les freins devraient développer pour que l'aéronef suive la trajectoire selon un mouvement (position, vitesse, accélération) donné. Le couple de lacet peut être par exemple nécessaire pour freiner l'aéronef dans un virage.

Les freins sont commandés par un module de commande de freinage 11 qui reçoit du module de guidage 10 l'objectif d'effort de freinage $\overline{F}$ et l'objectif de couple de lacet $\overline{C}$ à réaliser par les freins.

A partir de l'objectif d'effort de freinage *F* et l'objectif de couple de lacet *C,* le module de commande de freinage 11 génère deux niveaux de freinage Fg et Fd à destination respectivement :

- d'un groupe de freins gauche 12 regroupant les freins portés par l'atterrisseur principal de voilure gauche 1G et l'atterrisseur principal de fuselage gauche 2G;
- d'un groupe de freins droit 13 regroupant les freins portés par l'atterrisseur principal de voilure droit 1D et l'atterrisseur principal de fuselage droit 2D.

Des pointillés sur la figure 1 illustrent la composition des groupes gauche 12 et droit 13. On constate ici que les groupes gauche 12 et droit 13 sont symétriques.

Selon l'invention, les niveaux de freinage Fg et Fd sont déterminés de sorte que leur somme soit égale à l'objectif de freinage $\overline{F}$ et que leur effet en couple sur l'aéronef soit égal à l'objectif de couple de lacet $\overline{C}$.

En pratique, dans une telle configuration, l'objectif de couple de lacet *C* peut être spécifié par un écart entre l'effort à développer par l'un des groupes et l'effort à développer par l'autre des groupes.

Cependant, la satisfaction de l'objectif de freinage *F* et de l'objectif de freinage $\overline{C}$ suppose que les freins aient la capacité de freinage suffisante pour satisfaire ces deux objectifs à la fois, ce qui est le cas dans des conditions de fonctionnement normales des freins.

Dans certaines circonstances cependant (piste humide, freins défectueux), il se peut que l'un ou plusieurs des freins ne puisse générer qu'un effort limité de freinage, empêchant d'atteindre l'objectif de freinage *F* ou l'objectif de couple de lacet $\overline{C}$. Dans ce cas, un signal de saturation est envoyé par le groupe concerné au module de commande de freinage 11 qui tient compte de cette saturation pour générer des niveaux de freinage Fg,Fd qui permettent de s'approcher au mieux des objectifs $\overline{F}, C$ requis compte-tenu de la capacité de freinage disponible.

Selon un mode de mise en oeuvre particulier, le module de commande de freinage 11 est programmé pour hiérarchiser les objectifs, et peut par exemple donner la priorité à la réalisation de l'objectif de freinage $\overline{F}$ plutôt que la réalisation de l'objectif de couple de lacet *C.* Dans ce cas, le module de commande de freinage 11 génère des niveaux de freinages Fg,Fd qui sont adaptés à répondre à l'objectif de freinage *F,* mais dont l'effet sur le couple de lacet se rapproche le plus possible, compte tenu des capacités des freins, de l'objectif de couple *C.* De façon plus générale, on recherchera les niveaux de freinage Fg,Fd qui maximisent un taux de satisfaction simultanée des objectifs $\overline{F}, C,$ compte tenu d'éventuelles limitations d'un ou de plusieurs freins.

En variante, une possibilité peut être donnée au pilote de privilégier l'un ou l'autre des objectifs $\overline{F}, \overline{C}.$

Lors de l'application du freinage selon les niveaux de freinage Fg, Fd ainsi déterminés, le groupe de freins gauche 12 et le groupe de freins droit 13 ont une action mécanique sur la trajectoire de l'aéronef illustrée par les flèches en traits épais, de même que les moteurs 4, les roues orientables de l'atterrisseur auxiliaire 3 et la dérive 5, l'action de tous ces organes permettant d'influer sur la trajectoire de l'aéronef.

Des mesures de grandeurs significatives de la trajectoire, telles que la vitesse, l'accélération longitudinale ou angulaire, sont alors fournies au module de guidage 10 pour former une boucle de rétroaction.

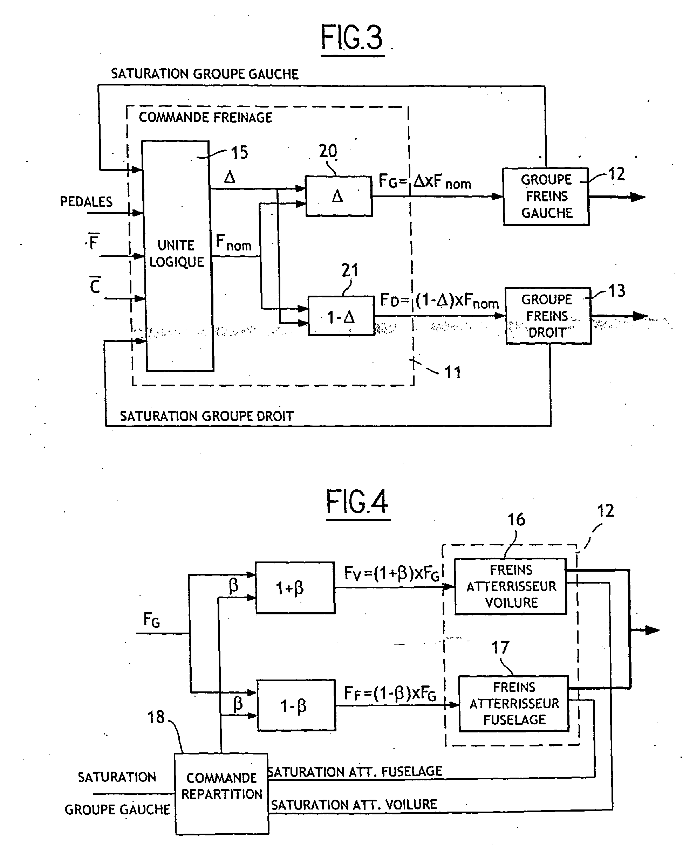

Le module de commande de freinage 11 est maintenant détaillé en relation avec la figure 3.

Le module de commande de freinage 11 comporte tout d'abord une unité logique 15 programmée pour, à partir de l'objectif de freinage $\overline{F}$ et de l'objectif de couple de lacet *C* requis, générer une consigne d'effort nominal Fnom et une consigne de répartition gauche/droite Δ au moyen desquelles un premier modulateur 20 génère le niveau de freinage Fg pour le groupe de freins gauche 12 et un deuxième modulateur 21 génère le niveau de freinage Fd pour le groupe de freins droit. En pratique, le niveau de freinage Fg est obtenu en effectuant le produit Δ.Fnom, et le niveau de freinage Fd est obtenue en effectuant le produit (1- Δ).Fnom. L'unité logique 15 est programmée pour, en cas de saturation de l'un ou l'autre des groupes de freins, moduler la consigne d'effort nominal Fnom et la consigne de répartition Δ pour s'approcher au mieux des objectifs *F,C,* compte tenu de la capacité de freinage disponible.

Ainsi, grâce à la répartition opérée selon l'invention, les freins permettent d'exercer sur l'aéronef un effort de freinage et un couple de lacet. Il est à noter que la répartition ainsi opérée n'est pas figée mais varie au cours du temps.

La connaissance du niveau de freinage d'un groupe permet d'estimer, par intégration temporelle du niveau de freinage, l'énergie à dissiper par les freins de ce groupe.

La logique de groupage des freins selon l'invention peut être poussée à un niveau supérieur en distinguant des sous-groupes dans un groupe. Par exemple dans le groupe gauche, on distingue comme cela est illustré à la figure 4 un premier sous-groupe 16 composé des freins équipant l'atterrisseur principal de voilure gauche 1G, et un deuxième sous-groupe 17 composé des freins équipant l'atterrisseur principal de fuselage gauche 2G.

On subdivise le niveau de freinage Fg en deux sous-niveaux de freinage Fv et Ff à destinations des deux sous-groupes 16,17 au moyen d'un module de commande de répartition 18 qui génère un coefficient de répartition $\beta$ avec lequel on effectue les produits Fv=(1+ $\beta$).Fg et Ff=(1- $\beta$).Fg. Par construction, la somme des sous-niveaux de freinage Fv et Fb est égale au niveau de freinage Fg. Le module de commande de répartition 18 tient compte des signaux de saturation provenant respectivement des freins du premier sous-groupe 16 et des freins du deuxième sous-groupe 17 pour calculer le coefficient de répartition $\beta$. Ainsi, si les freins de l'un des sous-groupes saturent, il est possible de basculer l'effort de freinage sur les freins de l'autre sous-groupe. Si ce basculement ne suffit plus pour atteindre la consigne de freinage gauche Fg, le module de commande de répartition 18 génère un signal de saturation du groupe de freins gauche 12.

Pour réaliser le niveau de freinage visé pour un groupe des freins (ou à un sous-groupe), il convient que tous les freins du groupe génèrent des efforts unitaires de freinage tels que la résultante.des efforts unitaires de freinage développé par chacun des freins atteigne le niveau de freinage requis.

Selon une première façon de procéder, on fait en sorte que les efforts unitaires de freinage soient identiques pour tous les freins du groupe. C'est la façon la plus simple de procéder.

Selon un deuxième façon de procéder particulièrement avantageuse, on détermine les différents efforts unitaires de freinage pour satisfaire un critère opérationnel donné, tout en se conformant au niveau de freinage requis, compte tenu bien sûr de la capacité de freinage disponible.

Conformément à un premier mode de mise en oeuvre, le critère opérationnel retenu est la minimisation de l'usure subie par les éléments de friction des freins du groupe. Il est connu que les éléments de friction en carbone ont un taux d'usure qui dépend de la température des éléments de friction. Si $\mathit{\Delta T_k}$ est l'augmentation de la température du frein k lors du freinage à venir, l'usure sur le frein k vaudra

$$U_k = \int_{T_k}^{T_k+\Delta T_k} \tau(T)dT$$

où $\tau$ est le taux d'usure dépendant notamment de la température.

Pour calculer l'augmentation de température $\mathit{\Delta T_k}$ du frein k, on utilise un modèle thermique du frein qui, en fonction d'une énergie $\mathit{\Delta E_k}$ dissipée par le frein, calcule l'augmentation de température $\mathit{\Delta T_k}$. En négligeant le refroidissement naturel du frein (ce qui est valable pour des durées de freinage courtes et des températures de frein faibles), il est possible de relier l'augmentation de température $\Delta T_k$ du frein k à l'énergie à dissiper $\Delta E_k$ par le frein lors du freinage à venir par le modèle suivant:

$$\Delta E_k = \int_{T_k}^{T_k+\Delta T_k} M_k C_p dT_k$$

où $M_k$ est la masse des éléments de friction du frein k, considérée comme constante lors du freinage, et Cp la capacité calorifique du matériau constitutif des éléments de friction du frein k.

L'énergie totale $\mathit{\Delta E}$ à dissiper par les freins du groupe est bien sûr égale à la somme des énergies dissipées par chaque frein. L'énergie totale à dissiper par les freins est donnée par intégration temporelle de l'objectif d'effort de freinage du groupe, comme déjà expliqué.

Ainsi, La minimisation de l'usure revient à rechercher pour chacun des freins du groupe les énergies $\mathit{\Delta E_k}$ à dissiper qui minimisent la quantité :

$$\sum_k U_k$$

sous la contrainte

$$\Delta E = \sum_k \Delta E_k$$

Du calcul des énergies $\Delta E_k$ à dissiper par chacun des freins du groupe, on déduit les consignes unitaires d'effort de freinage Fi à développer par chacun des freins.

La minimisation de l'usure peut être obtenue par toute technique d'optimisation connue. Selon un mode préféré de mise en oeuvre de l'invention, on se donne un certain nombre de répartitions arbitraires de l'énergie entre les freins du groupe. En pratique, chaque répartition est représentée par une liste de coefficients (autant que de freins dans le groupe) dont la somme est égale à 1. Par exemple, si le groupe comporte deux freins, on pourra considérer les répartitions suivantes:

$R^1=\{1;0\}$, $R^2=0,7;0,3\}$, $R^3=\{0,5;0,5\}$, $R^4=\{0,3;0,7\}$ et $R^5=\{0;1\}$.

La minimisation consiste à calculer pour chaque répartition arbitraire $R^i$ les énergies correspondantes $\Delta E_k^i$ pour chacun des freins, puis l'usure $U_k^i$ de chacun des freins produite par la dissipation de l'énergie correspondante. L'usure totale

$$U^i = \sum_k U_k^i$$

est la somme des usures ainsi calculées. On retient alors la répartition arbitraire $R^i$ qui donne l'usure totale $U^i$ la plus petite.

La minimisation de l'usure ainsi décrite concerne donc tous les freins d'un même groupe. On peut appliquer ce critère opérationnel pour chacun des groupes de freins, afin d'obtenir une minimisation groupe par groupe de l'usure des éléments de friction. Cependant, ainsi qu'il est bien connu, la minimisation de l'usure groupe par groupe peut conduire à un résultat qui ne soit pas optimal du point de vue de l'ensemble des freins de l'aéronef.

Avantageusement alors, le critère opérationnel de minimisation de l'usure est selon l'invention généralisé pour être appliqué à tous les freins de l'aéronef simultanément, tout en respectant, pour chaque groupe, le niveau d'effort de freinage requis. On recherchera alors la répartition sur l'ensemble des freins qui, tout en respectant pour chaque groupe le niveau d'effort de freinage requis, minimise l'usure globale.

Avantageusement encore, le critère opérationnel de minimisation de l'usure est selon l'invention généralisé non seulement pour tous les freins pour un freinage donné, mais également pour tous les freinages prévisibles le long de la trajectoire. Pour cela, il convient de déterminer à l'avance les freinages prévisibles, et donc l'énergie à dissiper pour chacun des groupes de freins, ce qui impose de connaître l'intégralité du parcours probable de l'aéronef sur l'aéroport.

Cette connaissance peut provenir soit de la mise en mémoire du ou des trajets possibles sur l'aéroport, soit d'une étude statistique portant sur un trajet type pour tel ou tel aéroport et spécifiant le nombre moyen de freinages et l'intensité moyenne de ceux-ci.

Sur le trajet retenu, on détermine un mouvement (position, vitesse, accélération) de l'aéronef le long de ce trajet et on en déduit les objectifs de freinage, de couple de lacet et d'énergie à dissiper par les freins.

On va maintenant détailler plus particulièrement la façon dont, selon l'invention, il est possible de gérer des situations dans lesquelles un ou plusieurs freins saturent. De telles situations peuvent survenir si l'adhérence du pneumatique au sol baisse soudainement, par exemple au passage d'une zone mouillée ou verglacée. Il n'est alors pas possible de satisfaire à la fois à l'objectif d'effort de freinage $\overline{F}$ et à l'objectif de couple $\overline{C}$.

Selon l'invention, on hiérarchise les objectifs, ce qui conduit à définir deux stratégies :

1- on privilégie l'objectif de couple de lacet $\overline{C}$ en renonçant provisoirement, tant que dure la saturation détectée, à atteindre l'objectif d'effort de freinage $\overline{F}$ ; Cette stratégie est particulièrement adaptée pour des situations pour lesquelles la distance disponible devant l'aéronef pour s'arrêter le cas échéant est largement suffisante. On assure ainsi que l'aéronef reste sur la trajectoire désirée, même si on ne peut assurer momentanément de caractéristiques de mouvement (notamment la vitesse) le long de cette trajectoire. En particulier, lors d'un atterrissage, cette stratégie permet au pilote de maintenir l'aéronef dans l'axe de la piste, au prix d'une possible augmentation de la distance de freinage ;

2- on privilégie l'objectif d'effort de freinage $\overline{F}$ en renonçant provisoirement, tant que dure la saturation détectée, à atteindre l'objectif de couple de lacet $\overline{C}$. Cette stratégie est plus particulièrement adaptée aux situations pour lesquelles il y a lieu d'être à tout moment en capacité de s'arrêter rapidement. Ainsi, le pilote pourra arrêter son aéronef sur une distance la plus courte compatible avec la capacité de freinage disponible, au prix d'une possible déviation par rapport à la trajectoire.

Bien sûr, on pourra également définir des stratégies intermédiaires, dans lesquelles on pondère les deux objectifs.

Pour mettre en oeuvre ces stratégies, et selon un mode particulier de mise en oeuvre, on commence par déterminer le niveau d'effort nominal pour le groupe droit Fdn et le niveau d'effort nominal pour le groupe gauche Fgn qui permettraient de satisfaire à la fois l'objectif de couple de lacet $\overline{C}$ et l'objectif d'effort de freinage $\overline{F}$, en l'absence de saturation.

On supposera ici que le groupe gauche sature de sorte qu'il ne puisse délivrer au maximum un niveau d'effort de freinage égal à Fgsat. Pour mettre en oeuvre la première stratégie, c'est-à-dire pour satisfaire prioritairement l'objectif de couple de lacet $\overline{C}$, on impose que la différence ΔF entre le niveau d'effort développé par le groupe gauche et le niveau d'effort développé par le groupe droit soit égale à :

$$\Delta F = Fgn - Fdn$$

Ce qui revient à imposer que le couple de lacet développé soit égal à l'objectif de couple de lacet $\overline{C}$ que les freins seraient normalement capables de développer en l'absence de saturation.

Dans ces conditions, le niveau d'effort imposé au groupe gauche est égal à :

$$Fg = \min(Fgn, \ Fgsat)$$

On en déduit donc que le niveau d'effort imposé au groupe droit est égal à :

$$Fd = Fg - \Delta F$$

Si le niveau d'effort nominal gauche Fgn est inférieur à l'effort de saturation Fgsat du groupe gauche, alors Fg=Fgn et Fd=Fg-ΔF=Fdn. On respecte alors également l'objectif de couple de lacet. Ce n'est que si le niveau d'effort nominal gauche Fgn dépasse l'effort de saturation Fgsat du groupe gauche que l'objectif de couple de lacet ne pourra être atteint.

La mise en oeuvre de cette stratégie dans le cas où le groupe droit sature est similaire. On impose toujours que la différence entre le niveau d'effort du groupe gauche et le niveau d'effort du groupe droit soit égale à :

$$\Delta F = (Fgn - Fdn)$$

Mais cette fois, c'est le niveau d'effort du groupe droit qui peut être limité :

$$Fd = \min \ (Fgn, Fdsat)$$

On en déduit alors le niveau d'effort du groupe gauche :

$$Fg = Fd + \Delta F$$

Si maintenant les deux groupes saturent, alors il convient de distinguer selon que le niveau d'effort nominal gauche Fgn est plus grand ou plus petit que le niveau d'effort nominal droit Fdn :

Si Fgn>Fdn, alors Fg=min (Fg,Fgn) et Fd=Fg-ΔF ;

Si Fgn<Fdn, alors Fd=min (Fd,Fdn) et Fg=Fd+ΔF ; où la différence ΔF est toujours imposée et égale à ΔF=Fgn-Fdn.

Bien sûr, il peut arriver des situations dans lesquelles, les deux groupes saturent au point de ne plus pouvoir respecter l'objectif de couple de lacet. Dans ce cas, on continuera néanmoins à privilégier l'objectif de couple de lacet $\overline{C}$, en s'en approchant le plus possible.

Pour la mise en oeuvre de la deuxième stratégie consistant à privilégier la réalisation de l'objectif d'effort de freinage $\overline{F}$, on impose cette fois que la somme ΣF du niveau d'effort gauche Fg et du niveau d'effort droit Fd soit égale à

$$\Sigma F = Fgn + Fdn,$$

ce qui revient à imposer que l'effort généré par l'ensemble des freins soit égal à l'objectif d'effort de freinage $\overline{F}$.

Dans le cas où le groupe gauche sature, on aura:

Fg=min(Fgn,Fgsat), et Fd=ΣF-Fg

Dans le cas où le groupe droit sature, on aura :

Fd=min(Fdn,Fdsat), et Fg=ΣF-Fd

Enfin, dans le cas où les deux groupes de freins saturent, l'effort maximal développable par l'ensemble freins vaut Fmax=Fgsat+Fdsat. Si ΣF<Fmax, alors il reste possible d'assurer l'objectif de freinage. Si par contre, ΣF<Fmax, l'objectif de d'effort freinage $\overline{F}$ ne peut plus être assuré. On cherchera alors à s'en approcher au mieux, en faisant freiner les freins au maximum de leur capacité, compte tenu de la saturation.

La sélection de la stratégie de répartition est de préférence laissée au choix du pilote. En variante, cependant, elle peut faire l'objet d'une sélection automatique par un calculateur de suivi de trajectoire. Dans ce cas, le pilote est de préférence prévenu que l'un des groupes de freins est arrivé à saturation.

L'invention n'est pas limitée à ce qui vient d'être décrit, mais bien au contraire englobe toute variante entrant dans le cadre défini par les revendications.

En particulier, la répartition de freinage selon l'invention reste compatible avec la mise en oeuvre d'une protection anti-glissement pour chacune des roues freinées.

Bien que l'on ait indiqué que l'on établit un objectif d'effort de freinage $\overline{F}$ et un objectif de couple de lacet $\overline{C}$, l'invention couvre également la situation où l'on n'établit que l'un des objectifs, par exemple l'objectif d'effort de freinage $\overline{F}$. Dans ce cas, il suffit de fixer arbitrairement l'objectif de couple de lacet $\overline{C}$ à zéro.

Bien que l'on ait indiqué que le critère opérationnel retenu pour l'application du freinage soit la minimisation de l'usure des éléments de friction, d'autres critères opérationnels pourront être retenus. Par exemple, on peut choisir comme critère opérationnel la recherche de la répartition qui conduit à une application d'effort de freinage la plus progressive possible afin d'améliorer le confort des passagers ou afin de préserver les éléments opérationnels de l'aéronef qui subissent directement l'effort de freinage (les atterrisseurs, les attaches de l'atterrisseur sur l'aéronef, les pneumatiques associés ...). On peut également chercher, à minimiser le nombre d'actionnements à effectuer par freins afin d'augmenter la durée de vie de ces derniers, ou encore minimiser l'amplitude des efforts à appliquer.

Enfin, bien que l'on ait réparti ici les freins en un groupe gauche et un groupe droit, cette répartition n'est pas limitative, et on pourra répartir les freins autrement, par exemple :

- un groupe gauche composé des freins de l'atterrisseur de voilure gauche,
- un groupe droit composé des freins de l'atterrisseur de voilure droit,
- et un groupe central composé des freins des atterrisseurs de fuselage;

La répartition des freins en groupes n'est pas forcément fixée une fois pour toutes mais peut, dans le cadre de l'invention, varier.

Il va de soi que l'invention ne s'applique pas uniquement à la configuration particulière illustrée ici comprenant deux atterrisseurs principaux de voilure et deux atterrisseurs principaux de fuselage, mais à toute configuration des atterrisseurs portant des freins.

Il va de soi également que l'invention s'applique indifféremment à des freins hydrauliques, électromécaniques ou de toute autre technologie.

**Revendications**

1. Procédé de répartition du freinage entre les freins d'un aéronef, comportant les étapes de:

    - estimer un objectif d'effort de freinage ($\overline{F}$) et un objectif de couple de lacet *(C)* à réaliser par les freins de l'aéronef ;
    - définir au moins deux groupes de freins (12,13);
    - déterminer pour chaque groupe un niveau de freinage (Fg,Fd) à réaliser par ledit groupe, lesdits niveaux de freinage étant calculés de sorte qu'un freinage réalisé selon lesdits niveaux de freinage soit, au moins dans des conditions normales de fonctionnement des freins, conforme à l'objectif d'effort de freinage et l'objectif de couple de lacet.

2. Procédé selon la revendication 1, dans lequel, on détermine les niveaux de freinage qui maximisent un taux de satisfaction simultanée de l'objectif de freinage et de l'objectif de couple de lacet.

3. Procédé selon la revendication 1, dans lequel on répartit les freins en au moins un groupe gauche (12) et un groupe droit (13) symétriques l'un de l'autre.

4. Procédé selon la revendication 3, dans lequel l'objectif de couple de lacet (*C*) est spécifié par un écart entre un effort de freinage à réaliser par le groupe gauche (12) et un effort de freinage à réaliser par le groupe droit (13).

5. Procédé selon la revendication 1, dans lequel l'objectif d'effort de freinage (*F*) ou l'objectif de couple de lacet (*C*) sont estimés en tenant compte d'une action d'organes de l'aéronef (3,4,5) autres que les freins pouvant avoir une influence sur une trajectoire de l'aéronef.

**Claims**

1. A method of distribution braking between the brakes of an aircraft, the method comprising the steps of:

    · estimating a braking force objective (F) and a steering torque objective ($\overline{C}$) to be achieved by the brakes of the aircraft;
    · defining at least two groups of brakes (12, 13); and
    · determining, for each group, a braking level (Fg, Fd) that is to be achieved by said group, said braking levels being calculated in such a manner that braking performed in application of said braking levels is, at least under normal operating conditions of the brakes, in compliance with the braking force objective and with the steering torque objective.

2. A method according to claim 1, in which the braking levels are determined that maximize the greatest simultaneous level of satisfaction concerning the braking objective and the steering torque objective.

3. A method according to claim 1, in which the at least two groups of brakes are at least a left group (12) and a right group (13) that are symmetrical to each other, the brakes are distributed between the left group (12) and the right group (13).

4. A method according to claim 3, in which the steering torque objective ($\overline{C}$) is specified by a difference between the braking force to be achieved by the left group (12) and a braking force to be achieved by the right group (13).

5. A method according to claim 1, in which the braking force objective (F) or the steering torque objective (C) are estimated while taking account of action by members of the aircraft (3, 4, 5) other than the brakes and capable of influencing the path followed by the aircraft.

## Patentansprüche

1. Verfahren zur Verteilung einer Bremsleistung auf die Bremsen eines Luftfahrzeugs, umfassend die folgenden Schritte:

   - Festsetzen einer Zielvorgabe für die Bremskraft (F) und einer Zielvorgabe für das Gierbewegungs-Moment (C), das durch die Bremsen des Luftfahrzeugs realisiert werden soll;
   - Definieren mindestens zweier Bremsgruppen (12, 13);
   - Bestimmung eines Bremsniveaus (Fg, Fd) für jede Gruppe, das von besagter Gruppe realisiert werden soll, wobei die besagten Bremsniveaus so berechnet werden, dass eine gemäß dieser Bremsniveaus realisierte Bremsung zumindest unter normalen Betriebsbedingungen der Bremsen mit der Zielvorgabe für die Bremsbeanspruchung und der Zielvorgabe für das Gierbewegungs-Moment konform ist.

2. Verfahren nach Anspruch 1, bei dem die Bremsniveaus bestimmt werden, die einen Grad der simultanen Erfüllung der Zielvorgabe für die Bremsung und der Zielvorgabe für das Gierbewegungs-Moment maximieren.

3. Verfahren nach Anspruch 1, bei dem die Bremsen mindestens in eine linke Gruppe (12) und eine rechte Gruppe (13) eingeteilt werden, die symmetrisch zueinander sind.

4. Verfahren nach Anspruch 3, bei dem die Zielvorgabe für das Gierbewegungs-Moment (C) durch eine Abweichung zwischen einer durch die linke Gruppe (12) und einer durch die rechte Gruppe (13) zu realisierenden Bremskraft spezifiziert ist.

5. Verfahren nach Anspruch 1, bei dem die Zielvorgabe für die Bremskraft (F) oder die Zielvorgabe für das Gierbewegungs-Moment (C) unter Berücksichtigung einer Funktion anderer Organe des Luftfahrzeugs (3, 4, 5) als der Bremsen berechnet werden, die einen Einfluss auf eine Flugbahn des Luftfahrzeugs haben können.

## FIG.1

## FIG.2

RETROACTION

CONSIGNE
TRAJECTOIRE

GUIDAGE
AERONEF
10

MOTEURS — 4

ORIENTATION — 3

DERIVE — 5

AERONEF

$\overline{C}$     $\overline{F}$

SATURATION

PEDALES

COMMANDE
FREINAGE
11

FG

FD

GROUPE
FREINS
GAUCHE — 12

GROUPE
FREINS
DROIT — 13

SATURATION

## FIG.3

SATURATION GROUPE GAUCHE

COMMANDE FREINAGE

PEDALES

$\overline{F}$

$\overline{C}$

UNITE LOGIQUE

15

$\Delta$

$F_{nom}$

20

$\Delta$

$F_G = \Delta \times F_{nom}$

GROUPE FREINS GAUCHE

12

21

$1-\Delta$

$F_D = (1-\Delta) \times F_{nom}$

GROUPE FREINS DROIT

13

11

SATURATION GROUPE DROIT

## FIG.4

$F_G$

$\beta$

$1+\beta$

$F_V = (1+\beta) \times F_G$

16

FREINS ATTERRISSEUR VOILURE

12

$\beta$

$1-\beta$

$F_F = (1-\beta) \times F_G$

17

FREINS ATTERRISSEUR FUSELAGE

18

SATURATION

GROUPE GAUCHE

COMMANDE REPARTITION

SATURATION ATT. FUSELAGE

SATURATION ATT. VOILURE

**EP 1 993 906 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005231031 A